# FASCICULE DE BREVET EUROPEEN

(11) **EP 0 765 094 B1**
(45) Date de publication et mention de la délivrance du brevet: **04.04.2001**
(21) Numéro de dépôt: 96401980.6
(22) Date de dépôt: 18.09.1996
(51) Int. Cl.: H04Q 7/32

(54) **Terminal pour réseau de radiocommunications mobiles**
Endgerät für ein Mobilfunk-Kommunkationssystem
Terminal for a mobile radio communications system

(30) Priorité: 19.09.1995 FR 9510958
(43) Date de publication de la demande: 26.03.1997
(73) Titulaire: ALCATEL, 75008 Paris (FR)
(72) Inventeur: Pinault, Francis, 92270 Bois Colombes (FR)
(74) Mandataire: El Manouni, Josiane

(56) Documents cités:
- EP-A- 0 369 110
- EP-A- 0 444 479

## Description

La présente invention concerne un terminal public de télécommunications, notamment pour réseau de radiocommunications mobiles.

La présente invention est notamment applicable aux réseaux de radiocommunications mobiles modernes, par exemple du type GSM ("Global System for Mobile communications").

Un terminal de télécommunications, qu'il soit public ou privé, comporte d'une manière générale, outre des moyens de télécommunication proprement dits, une interface homme-machine comportant elle-même des moyens (tels qu'un clavier par exemple) permettant à l'utilisateur d'introduire des données de commande de ce terminal.

De telles données de commande comportent naturellement des données (notamment relatives à la numérotation) essentielles à la mise en oeuvre d'un service dit de base fourni par le réseau considéré, mais elles peuvent aussi, notamment dans les réseaux de télécommunications modernes, comporter d'autres données.

Notamment, dans les réseaux de radiocommunications mobiles tels que le réseau GSM par exemple, elles peuvent comporter des données relatives à la commande de services dits supplémentaires.

A titre d'exemple de services supplémentaires, on citera :
- l'interdiction d'appels sortants,
- la limitation d'appels sortants (par exemple l'interdiction d'appels internationaux),
- l'interdiction d'appels entrants,
- le renvoi d'appels entrants vers un autre numéro...etc.

Le fait que l'utilisateur d'un terminal puisse lui-même commander, par l'intermédiaire du clavier de ce terminal, les services supplémentaires auxquels il souhaite avoir accès, soulève un problème dans le cas d'un terminal public, qui est qu'un tel terminal risque de devenir totalement ou partiellement inopérant à la suite d'une telle manoeuvre.

La présente invention a essentiellement pour but de résoudre ce problème.

Par ailleurs, également dans les réseaux de radiocommunications mobiles tels que le réseau GSM par exemple, où des informations sont stockées dans une carte, telle que la carte dite carte "SIM" ("Subscriber Identity Module") par exemple, à introduire dans le terminal pour permettre son utilisation, de telles données de commande peuvent aussi comporter des données relatives à la commande de services liés à cette carte. Comme ces services peuvent conduire à modifier ou à effacer des informations contenues dans cette carte, leur activation peut également entraîner, dans le cas d'une carte intégrée à un terminal public, le risque que ce terminal devienne totalement ou partiellement inopérant à la suite d'une telle activation. Il se pose donc un problème de même nature que celui mentionné plus haut pour les services supplémentaires; pour cette raison on regroupera dans ce qui suit ces deux types de services, à savoir services supplémentaires et services liés à la carte, notamment carte "SIM", sous le terme général de services additionnels.

La présente invention a ainsi pour objet un terminal public de télécommunications, notamment pour réseau de radiocommunications mobiles, ce réseau étant apte à fournir, outre un service dit de base, des services dits additionnels, ce terminal comportant des moyens dits d'introduction de données de commande de ce terminal, et ce terminal étant essentiellement caractérisé en ce qu'il comporte en outre des moyens de reconnaissance de données de commande de services additionnels, et des moyens pour interdire la prise en compte de données ainsi reconnues.

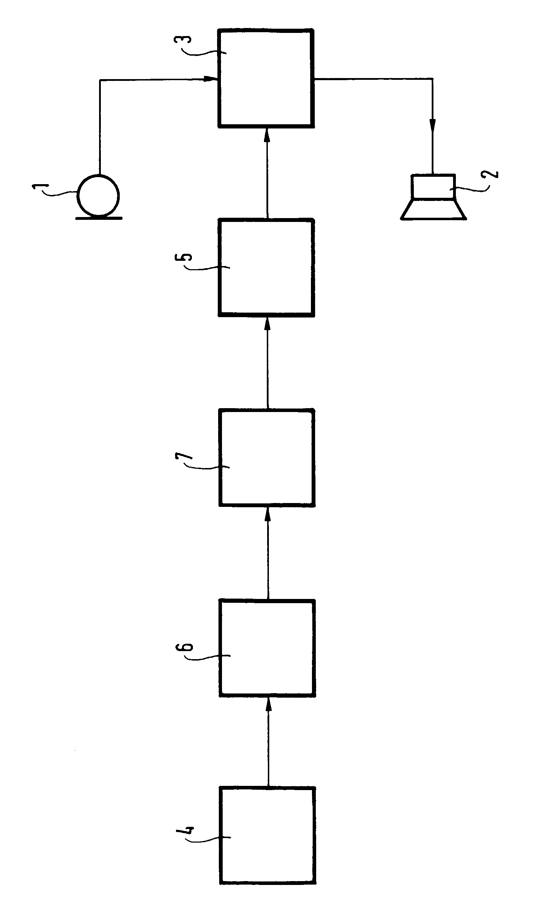

D'autres objets et caractéristiques de la présente invention apparaîtront à la lecture de la description suivante d'un exemple de réalisation, faite en relation avec la figure unique ci-annexée donnant le schéma général d'un exemple de terminal suivant l'invention.

Le terminal illustré schématiquement sur cette figure comporte :
- des moyens de télécommunication proprement dits, constitués par exemple par un microphone 1 et un écouteur 2, connectés à des moyens d'émission-réception 3,
- des moyens d'introduction de données de commande de ce terminal, constitués par exemple par un clavier 4,
- des moyens, 5, pour commander le fonctionnement de ce terminal à partir des données de commande ainsi introduites, ces moyens 5 étant notamment constitués par des moyens de traitement de données tels qu'un microprocesseur par exemple.

Suivant l'invention, ce terminal comporte en outre :
- des moyens, 6, de reconnaissance de données introduites par les moyens d'introduction de données 4 et relatives à la commande de services additionnels, tels que définis plus haut,
- des moyens, 7, pour interdire la prise en compte de données ainsi reconnues.

Les données de commande de services additionnels sont généralement constituées par des séquences prédéfinies telles que, par exemple, dans le cas d'application à un réseau GSM, la séquence suivante : * 21 * numéro de renvoi # permettant le renvoi d'appels.

D'autres exemples de séquences peuvent être trouvés pour cet exemple d'application dans les spécifications du système GSM, ou dans le livre de Michel MOULY et Marie-Bernadette PAUTET intitulé "The GSM System for Mobile communications" (ISBN : 2-9507190-0-7).

Les moyens 6 comportent alors des moyens permettant d'identifier de telles séquences.

La réalisation de tels moyens ne posant pas de problème particulier, on n'entrera pas ici dans le détail de réalisation de ces moyens.

En outre, dans le cas de moyens de commande 5 constitués par des moyens de traitement de données tels qu'un microprocesseur par exemple, les moyens 6 peuvent être inclus dans le logiciel de ces moyens de traitement de données.

Par ailleurs, également dans le cas de moyens de commande 5 constitués par des moyens de traitement de données tels qu'un microprocesseur par exemple, les moyens 7 pour interdire la prise en compte, par ces moyens 5, de données ainsi reconnues, peuvent être inclus dans le logiciel de ces moyens de traitement de données.

## Revendications

1. Terminal public de télécommunications, notamment pour réseau de radiocommunications mobiles, ce réseau étant apte à fournir, outre un service dit de base, des services dits additionnels, et ce terminal comportant des moyens (4) dits d'introduction de données de commande de ce terminal, caractérisé en ce que ce terminal comporte en outre des moyens (6) de reconnaissance de données de commande de services additionnels, et des moyens (7) pour interdire la prise en compte de données ainsi reconnues.

2. Terminal selon la revendication 1, caractérisé en ce que lesdits services additionnels sont constitués par des services dits supplémentaires.

3. Terminal selon la revendication 1, caractérisé en ce que lesdits services additionnels sont constitués par des services liés à une carte destinée à être introduite dans ce terminal pour permettre son utilisation.

## Claims

1. Public telecommunication terminal, in particular for mobile radio networks, the network being adapted to provide additional services over and above a basic service and said terminal including terminal control data entry means (4), characterized in that said terminal further includes means (6) for recognizing additional service control data and means (7) for prohibiting action on data thus recognized.

2. Terminal according to claim 1, characterized in that said additional services are constituted by supplementary services.

3. Terminal according to claim 1, characterized in that said additional services are constituted by services related to a card adapted to be inserted into said terminal to enable it to be used.

## Patentansprüche

1. Öffentliches Telekommunikationsendgerät, insbesondere für Mobilfunk-Kommunikationsnetze, wobei dieses Netz fähig ist, außer einem Basisdienst genannten Dienst Zusatzdienste genannte Dienste bereitzustellen und wobei dieses Endgerät Mittel (4) umfasst, die Steuerdateneingabemittel dieses Endgeräts genannt werden, dadurch gekennzeichnet, dass dieses Endgerät außerdem Mittel (6) zur Erkennung von Steuerdaten für Zusatzdienste und Mittel (7) zur Sperrung der Berücksichtigung von so erkannten Daten umfasst.

2. Endgerät nach Anspruch 1, dadurch gekennzeichnet, dass die Zusatzdienste aus Ergänzungsdienste genannten Diensten bestehen.

3. Endgerät nach Anspruch 1, dadurch gekennzeichnet, dass die Zusatzdienste aus Diensten bestehen, die mit einer Karte verbunden sind, die dazu bestimmt ist, in dieses Endgerät eingesetzt zu werden, um seine Benutzung zu gestatten.
